# EUROPÄISCHE PATENTSCHRIFT

(11) **EP 0 821 746 B1**
(45) Veröffentlichungstag und Bekanntmachung des Hinweises auf die Patenterteilung: **31.01.2001**
(21) Anmeldenummer: 96914962.4
(22) Anmeldetag: 19.04.1996
(51) Int. Cl.: D04H 1/60, D04H 1/54, D04H 13/00

(54) **DÄMMELEMENT AUS PFLANZENFASERN**
THERMAL-INSULATION ELEMENT MADE OF VEGETABLE FIBRES
ELEMENT THERMO-ISOLANT EN FIBRES VEGETALES

(30) Priorität: 21.04.1995 DE 29506761 U
(43) Veröffentlichungstag der Anmeldung: 04.02.1998
(73) Patentinhaber: ECCO Gleittechnik GmbH, 82402 Seeshaupt (DE)
(72) Erfinder: ZIMMER, Hugo, A-9632 Kirchbach im Gailtal (AT)
(74) Vertreter: Kinzebach, Werner, Dr.
(86) Internationale Anmeldenummer: EP9601658
(87) Internationale Veröffentlichungsnummer: WO9633306

(56) Entgegenhaltungen:
- EP-A- 0 591 658
- DE-A- 3 301 407
- DE-A- 4 211 732
- DE-B- 1 070 585
- DE-C- 4 218 549

## Beschreibung

Die vorliegende Erfindung betrifft ein Dämmelement aus Pflanzenfasern.

Dämmelemente dienen zur Vermeidung von Wärmeverlusten und zur Schallisolierung. Bekannte Dämmelemente bestehen aus synthetischen bzw. mineralischen Stoffen, wie Glaswolle, Steinwolle oder Polystyrol. Gegen die Verwendung derartiger Materialien bestehen in jüngster Zeit Bedenken, da sie möglicherweise eine Gesundheitsgefährdung darstellen. Es wurde daher bereits versucht, die synthetischen und mineralischen Fasern durch natürliche Fasern zu ersetzen. Beispielsweise beschreibt die EP-A-589 469 eine Isoliermatte in Form eines Vlieses aus Flachsfasern. Diese Isoliermatte besteht aus einem zweidimensionalen Faservlies mit relativ hohem Raumgewicht. Um eine ausreichende Isolierung, beispielsweise bei Dächern, zu erzielen, ist es erforderlich, mehrere Lagen des Faservlieses zu verwenden. Aufgrund des relativ hohen Raumgewichtes der Vliese können dabei Verarbeitungsschwierigkeiten auftreten, und die erzielte Isolierung ist nicht voll zufriedenstellend.

Die DE-A-42 23 614 beschreibt einen Dämmstoff aus Flachsfasern in Form eines verdichteten Vieses. Auch dieser Dämmstoff besitzt daher ein relativ hohes Raumgewicht.

Die EP-A-591 658 beschreibt ein Wärmedämmelement aus Flachsfasern, das aus mehreren miteinander verbundenen Vliesschichten besteht. Jede Schicht hat für sich genommen eine Dichte von 7,5 bis 25 kg/m³. Im Verbund werden diese Schichten auf Grund ihres Gewichtes aber komprimiert, so daß das Wärmedämmelement insgesamt ebenfalls ein relativ hohes Raumgewicht besitzt.

Das deutsche Gebrauchsmuster DE-U-295 02 582.4 beschreibt einen Dämmstoff, der aus einer mehrlagigen Baumwollschicht besteht, welche auf eine feuchtigkeitsundurchlässige Deckschicht aufgebracht ist, um die Aufnahme von Luftfeuchtigkeit, z. B. aus einem mit dem Dämmstoff isolierten Gebäude, zu verhindern.

Die DE-A-44 20 057 beschreibt eine Fasermatte, die aus einem Gemisch aus 20 bis 90 Gew.-% einer natürlichen, spröden Faser und 10 bis 80 % einer elastischen Faser besteht. Dadurch werden die Rücksprungeigenschaften der Fasermatte verbessert.

Der vorliegenden Erfindung liegt die Aufgabe zugrunde, ein Dämmelement aus Pflanzenfasern zur Verfügung zu stellen, das ein geringes Raumgewicht und ausreichende Isoliereigenschaften besitzt.

Überraschenderweise wurde nun gefunden, daß diese Aufgabe gelöst wird durch ein Dämmelement aus einem dreidimensionalen Wirrvlies aus Pflanzenfasern.

Gegenstand der vorliegenden Erfindung ist daher ein Dämmelement aus Pflanzenfasern, das dadurch gekennzeichnet ist, daß es aus einem Vlies mit dreidimensionaler isotroper Faser- Wirrstruktur gebildet ist, das ein Raumgewicht ≤ 25 kg/m³ besitzt.

Das Dämmelement kann eine oder mehrere Vliesschichten umfassen, wobei eine Vliesschicht eine Dicke von bis zu 18 cm besitzen kann. Das Vlies hat ein Flächengewicht von < 2000 g/m², vorzugsweise ≤ 1500 g/m² bei 10 cm (ausreichend, um einen K-Wert von 0,4 W/m² • °K zu erreichen) und ist ungewöhnlich stabil. Bei einer Belastung mit 1400 g/m² ist lediglich ein Dickenverlust von höchstens 5 % zu beobachten. Das Raumgewicht liegt vorzugsweise im Bereich von 15 bis 20 kg/m³.

Zur Herstellung des Vlieses wird zunächst ein Vorvlies gebildet, das dann mit Hilfe einer gezahnten Auflösewalze in Einzelfasern aufgelöst wird. Diese werden dann durch ein Fliehkraftbedingtes Abschleudern der Fasern, gegebenenfalls mit Unterstützung eines tangential zur Auflösewalze gerichteten Blasluftstromes, abgelöst und in Wirrlage auf eine quer zum Faserstrom verlaufende, besaugte Fangfläche oder Trommel aufgebracht. Um zu verhindern, daß auf diese Weise herkömmliche Vliese mit hohem Raumgewicht gebildet werden, ist eine zusätzliche besaugte Fangfläche (Ablenkfläche) für den Faserstrom vorgesehen. Dies kann beispielsweise durch eine weitere, gegensinnig zur Auflösewalze betriebene Walze oder Trommel erreicht werden, welche in einem zur Fangfläche gerichteten Bereich besaugt ist. Der Abstand der Walze von der Fangfläche und der Winkel der Besaugungsrichtung zur Fangfläche bzw. zum Faserstrom kann zur Erzielung unterschiedlicher Vliesdicken und maximaler Ergebnisse variiert werden. Auf diese Weise kommt es durch Ablagerung der Fasern auf der Fangfläche oder Trommel einerseits und der zusätzlichen besaugten Fläche oder Trommel andererseits zur Aufteilung des Faserstroms und damit zur Bildung eines Vlieses mit voluminösem Aufbau, d.h. geringem Raumgewicht.

Die Fasern befinden sich im fertigen Vlies in Wirrlage in einer dreidimensional isotropen Richtungsverteilung. Bei schichtorientierten Vliesen (sogenannten "Schichtvliesen") ist die Struktur weitgehend zweidimensional und die Richtungsverteilung der Fasern im Vlies stark anisotrop.

Überraschenderweise hat sich gezeigt, daß auf Grund der beschriebenen Herstellungsweise die Faserfeinheit von einer Seite zur gegenüberliegenden Seite zunimmt. Die Vliese sind daher besonders geeignet zur Schallisolierung, weil die schallschluckende Wirkung von einer Seite zur anderen zunimmt. Bei schichtorientierten bzw. gelegten Vliesen ist dies nicht der Fall.

Erfindungsgemäß brauchbare Pflanzenfasern sind insbesondere Bastfasern, wie Hanf-, Jute-, Nessel-, Kenaf-, Sisal-, Elefantengras-, und insbesondere Flachsfasern oder deren Mischungen. Man kann auf herkömmliche Weise gewonnene Fasern einsetzen, wobei sowohl die gerösteten als auch die ungerösteten Fasern brauchbar sind, z. B. Grünflachs, Röstflachs, Grünhanf, Rösthanf, etc.. Besonders gute Ergebnisse werden jedoch mit einer Faser erhalten, die durch Ultraschallbehandlung von Grünflachs und anderen Faserarten erhalten werden kann, vgl. WO 90/12906, da bei diesen Fasern auf ein Avivagemittel bei der Vliesbildung verzichtet werden kann.

Die Länge der für die Vliesbildung eingesetzten Fasern beträgt vorzugsweise etwa 60 - 100 mm, insbesondere 70 - 90 mm. Wie schon erwähnt, läßt sich mit derartigen Fasern ein voluminöses Vlies mit einem Flächengewicht von < 2000 g/m², insbesondere 800 - 1800 g/m², bei einer Dicke bis 18 cm, gewinnen.

Es hat sich überraschenderweise gezeigt, daß erfindungsgemäß Vliese auch ohne Zusatz eines flüssigen Bindemittels hergestellt werden können. Vorteilhafterweise gibt man zu den Pflanzenfasern jedoch sogenannte Stützfasern, wie biologisch abbaubare Bikomponentenfasern, Fasern auf Stärkebasis oder Schmelzbindefasern. Im allgemeinen verwendet man die Stützfasern in einer Menge von etwa 10-20 Gew.-%, bezogen auf die Pflanzenfasern.

Die Schmelzbindefasern verschmelzen beim Thermobonding, das nach Vliesbildung erfolgt, an den Berührungsstellen mit den Pflanzenfasern, was zu einer Erhöhung der Rücksprungwerte führt. Geeignete Schmelzbindefasern sind beispielsweise Polyethylen-, Polypropylen-, Polyamidfasern und sogenannte Bikomponentenschmelzklebefasern, z. B. aus Polypropylen/Polyamid.

Zweckmäßigerweise wird vor der Vliesbildung ein Avivagemittel auf die Fasern aufgebracht. Dieses soll z. B. die Faser-Faser-Haftung und damit das Stehvermögen des Vlieses erhöhen und den Materialverschleiß mindern (Materialverschleiß an den Maschinen, Karden, Messern usw.). Für diesen Zweck geeignete Avivagemittel sind beispielsweise die unter der Bezeichnung Türkonöl und Elvausan von der Firma Sollner in den Handel gebrachten Produkte, die unter der Bezeichnung Leomin von der Firma Hoechst in den Handel gebrachten Produkte, die unter der Bezeichnung Duron und Duranol von der Firma Hansa in den Handel gebrachten Produkte, etc. Die Menge an Avivagemittel beträgt vorzugsweise 1 bis 5 Gew.-%, bezogen auf das Gewicht der Pflanzenfasern.

Gewünschtenfalls können die Fasern vor, während oder nach der Vliesbildung auch mit einem Bindemittel ausgerüstet werden. Das Bindemittel kann organischer oder anorganischer Natur und synthetischer oder natürlicher Herkunft sein. Brauchbare synthetische Bindemittel sind Polyethylen, Polypropylen, Polyester, wie Polyethylenterephthalat, Melaminharze in jeglicher Form und Epoxidharze. Bevorzugt sind jedoch natürliche und gegebenenfalls semi-synthetische Bindemittel, wie Stärke und Stärkederivate, Cellulosederivate, Wasserglas, Knochenleim, Kautschuk und caseinhaltige Substanzen.

Die Bindemittel müssen so beschaffen sein, daß sie entweder nach der Vliesbildung durch einen zusätzlichen Behandlungsschritt, beispielsweise durch eine Wärmebehandlung, geschmolzen bzw. erweicht werden können oder daß sie, wenn sie nach der Vliesbildung aufgebracht werden, härten oder gehärtet werden können. Auf diese Weise entsteht an den Kontaktstellen der Fasern eine mehr oder weniger feste Verbindung, wodurch die mechanische Festigkeit (Standfestigkeit) des Vlieses zusätzlich erhöht wird. Das Bindemittel wird zweckmäßigerweise in einer Menge von 10 - 30 Gew.-%, bezogen auf das Gewicht der Fasern, aufgebracht.

Gewünschtenfalls kann man das Vlies auch mit einem Flammschutzmittel ausrüsten. Geeignete Flammschutzmittel sind beispielsweise Antimonoxid, Eisensulfat, Alaun, Wismutoxid, anorganische Phosphorverbindungen, z. B. Phosphate oder Silikate (Wasserglas). Ein weiteres geeignetes Flammschutzmittel ist Molke, die mit einem Alkalimetallcarbonat versetzt ist. Die Molke, insbesondere Sauermilchmolke, enthält zu diesem Zweck vorzugsweise 5-20 Gew.-% Carbonat, bezogen auf die Feststoffbestandteile der Molke. Das Carbonat wird in gelöster Form zugegeben, um Ausfällungen in der Molke zu vermeiden. Die Zugabe erfolgt zweckmäßigerweise bei etwa 20-30°C

Das Aufbringen des Flammschutzmittels erfolgt in üblicher Weise, z. B. durch Aufsprühen oder Tauchen der Fasern in die Flammschutzmittelflotte, und anschließendes Schleudern und Trocknen der Fasern. Das Flammschutzmittel ist üblicherweise in einer Menge von 0,1 - 10 Gew.-%, bezogen auf das Gewicht der Fasern, vorhanden.

Gewünschtenfalls können die erfindungsgemäßen Vliese auch mit Hydrophobiermitteln ausgerüstet werden, beispielsweise mit einem Fluorpolymer, Paraffin, Polysiloxan, oder reaktiven Hydrophobierungsmitteln (Silane, Isocyanate).

Schließlich können die erfindungsgemäßen Vliese auch mit üblichen Konservierungsmitteln, vorzugsweise Wasserglas oder Kaliumsorbat und/oder antifungischen Mitteln, z. B. Undecylensäure oder Benzimidazolverbindungen, wie 2-Methoxycarbonylaminobenzimidazol, ausgerüstet werden.

Gewünschtenfalls werden die Vliese mit einer ein- bzw. beidseitigen Kaschierung versehen. Zu diesem Zweck geeignete Materialien sind Aluminium- oder Polyethylenfolien, Flachs- oder Jutefaser-verstärktes Doppelpechpapier oder bitumiertes Krafftpapier, verklebtes oder vernadeltes Naturfasergewebe, beispielsweise Leinen-, Jute- oder Baumwollgewebe, oder ein genadeltes Vlies höherer Dichte (z. B. 300 g/m² bei einer Dicke von 0,5 cm).

Die erfindungsgemäßen Dämmelemente sind insbesondere zur Wärmeund Schallisolierung geeignet.

Das nachfolgende Beispiel erläutert die Erfindung.

### Beispiel

Man reinigt Flachsfasern von Staub und Holz- bzw. Stengelteilen mit Hilfe eines Grob- und/oder Mittelauflösers und Kondensers (z. B. La Roche, TEMAFA-Anlage) und imprägniert die erhaltenen Fasern in einem Bad mit 5 % Flovan FD (Ammoniumphosphat-haltiges Flammschutzmittel, vertrieben von der Firma Chemische Fabrik Pfersee) und trocknet die Fasern in einer Trockenanlage. Danach schneidet man die Fasern auf eine Länge von bis zu 15 cm und löst sie in einem Mittelauflöser auf. Anschließend vermischt man sie homogen mit Polypropylen-Schmelzklebefasern im Verhältnis von Flachsfasern zu Schmelzklebefasern von 8:2. Danach führt man die Fasern einer nach dem aerodynamischen Prinzip arbeitenden Vliesanlage (Fehrer-Vliesanlage) zu und stellt auf dieser Anlage ein Vlies mit einem Gewicht von 1500 g/m² bei einer Vlieshöhe von 135 mm her.

Dieses Vlies transportiert man auf einem Förderband in eine Thermobondinganlage und belüftet es dort mit Heißluft von 130° C bei einer Geschwindigkeit von 20 m/min. Danach kühlt man die Vliesbahn auf Raumtemperatur ab und kaschiert sie gewünschtenfalls mit faserverstärktem, Aluminium-beschichtetem oder unbeschichtetem Krafftpapier. Anschließend wird die Vliesbahn in die gewünschte Größe zugeschnitten und gegebenenfalls abgetafelt.

Ein entsprechendes Produkt wird erhalten, wenn man anstelle von Flovan FD als Flammschutzmittel ein Sauermolkebad mit 10 Gew.-% Natriumcarbonat verwendet.

## Patentansprüche

1. Dämmelement aus Pflanzenfasern, dadurch gekennzeichnet, daß es aus einem Vlies mit dreidimensionaler isotroper Faser- Wirrstruktur und mit einem Raumgewicht ≤ 25 kg/m³ gebildet ist.

2. Dämmelement nach Anspruch 1, dadurch gekennzeichnet, daß das Raumgewicht 15 bis 20 kg/m³ beträgt.

3. Dämmelement nach Anspruch 1 oder 2, dadurch gekennzeichnet, daß es aus Flachs-, Hanf-, Jute-, Nessel-, Kokos-, Kenaf-, Sisal- oder Elefantengrasfasern gebildet ist.

4. Dämmelement nach einem der vorhergehenden Ansprüche, dadurch gekennzeichnet, daß die Fasern des Vlieses mit einem Avivagemittel ausgerüstet sind.

5. Dämmelement nach einem der vorhergehenden Ansprüche, dadurch gekennzeichnet, daß das Vlies mit einem Bindemittel ausgerüstet ist.

6. Dämmelement nach Anspruch 5, dadurch gekennzeichnet, daß es sich bei dem Bindemittel um Knochenleim oder Wasserglas handelt.

7. Dämmelement nach einem der vorhergehenden Ansprüche, dadurch gekennzeichnet, daß das Vlies mit einem Flammschutzmittel, Hydrophobiermittel, antifungischen Mittel und/oder Konservierungsmittel ausgerüstet ist.

8. Dämmelement nach Anspruch 7, dadurch gekennzeichnet, daß es sich bei dem Flammschutzmittel um ein Produkt auf Basis von Ammoniumphosphat, um Wasserglas oder um Molke, die mit einem Alkalimetallcarbonat versetzt ist, und/oder bei dem Konservierungsmittel um Wasserglas handelt.

9. Dämmelement nach einem der vorhergehenden Ansprüche, dadurch gekennzeichnet, daß es außerdem synthetische Schmelzbindefasern umfaßt.

10. Dämmelement nach einem der vorhergehenden Ansprüche, dadurch gekennzeichnet, daß die Faserfeinheit von einer Seite des Vlieses zur gegenüberliegenden hin zunimmt.

11. Dämmelement nach einem der vorhergehenden Ansprüche, dadurch gekennzeichnet, daß es eine beidseitige Kaschierung aufweist.

## Claims

1. An insulating element of plant fibres, characterised in that it is formed from a fleece with a three-dimensional irregular structure of isotropic fibre and with a density of ≤ 25 kg/m³.

2. An insulating element according to claim 1, characterised in that the density is 15 to 20 kg/m³.

3. An insulating element according to claim 1 or 2, characterised in that it is formed from flax, hemp, jute, nettle, coconut, kenaf, sisal or elephant grass fibres.

4. An insulating element according to one of the preceding claims, characterised in that the fleece fibres are provided with a brightening agent.

5. An insulation element according to one of the preceding claims, characterised in that the fleece fibres are provided with a bonding agent.

6. An insulating element according to claim 5, characterised in that the bonding agent is bone glue or waterglass.

7. An insulating element according to one of the preceding claims, characterised in that the fleece is equipped with a fireproofing agent, water-repellent agent, anti-fungal agent and/or a preservative.

8. An insulating element according to claim 7, characterised in that the fireproofing agent is a product based on ammonium phosphate, waterglass or whey which is mixed with an alkali metal carbonate, and/or that the preservative is waterglass.

9. An insulating element according to one of the preceding claims, characterised in that it also contains synthetic melt-bonded fibres.

10. An insulating element according to one of the preceding claims, characterised in that the fibre fineness increases from one side of the fleece to the other.

11. An insulating element according to one of the preceding claims, characterised in that it is laminated on both sides.

## Revendications

1. Elément isolant de fibres végétales, caractérisé en ce qu'il est formé d'un non-tissé avec une structure de fibres isotropes emmêlées en trois dimensions et d'un poids spécifique ≤ 25 kg/m³.

2. Elément isolant selon la revendication 1, caractérisé en ce que le poids spécifique est de 15 à 20 kg/m³.

3. Elément isolant selon la revendication 1 ou 2, caractérisé en ce qu'il est formé de fibres de lin, chanvre, jute, coton écru, coco, kenaf, sisal ou typha.

4. Elément isolant selon l'une des revendications précédentes, caractérisé en ce que les fibres du non-tissé sont munies d'un agent d'avivage.

5. Elément isolant selon l'une des revendications précédentes, caractérisé en ce que le non-tissé est muni d'un agent liant.

6. Elément isolant selon la revendication 5, caractérisé en ce que l'agent liant est de la colle d'os ou du verre soluble.

7. Elément isolant selon l'une des revendications précédentes, caractérisé en ce que le non-tissé est muni d'un agent ignifugeant, d'un agent hydrophobisant, d'un agent antifongique et/ou d'un agent conservateur.

8. Elément isolant selon la revendication 7, caractérisé en ce que l'agent ignifugeant est un produit à base de phosphate d'ammonium, du verre soluble ou bien du petit-lait mélangé à un carbonate de métal alcalin et/ou en ce que l'agent conservateur est du verre soluble.

9. Elément isolant selon l'une des revendications précédentes, caractérisé en ce qu'il comprend en outre des fibres synthétiques à liaison par fusion.

10. Elément isolant selon l'une des revendications précédentes, caractérisé en ce que la finesse des fibres augmente en partant d'une face du non-tissé en direction de la face opposée.

11. Elément isolant selon l'une des revendications précédentes, caractérisé en ce qu'il présente un placage sur les deux faces.
